# EUROPEAN PATENT SPECIFICATION

(11) **EP 2 387 051 B1**
(45) Date of publication and mention of the grant of the patent: **10.07.2013**
(21) Application number: 10162724.8
(22) Date of filing: 12.05.2010
(51) Int. Cl.: H01G 2/10, H01G 4/224

(54) **Capacitor element and method of encapsulating a capacitor base body**
Kondensatorelement und Verfahren zur Einkapselung eines Kondensatorgrundkörpers
Elément de condensateur et procédé d'intégration d'un corps de base de condensateur

(43) Date of publication of application: 16.11.2011
(73) Proprietor: Epcos AG, 81669 München (DE)
(72) Inventor: Haenssler, Ronald, 83104 Tuntenhausen (DE); Eghe, Rahul, Nashik 422005 (IN); Mottammani, Surendrababu, Payyanur 670333 (IN)
(74) Representative: Fuchs, Alexander

(56) References cited:
- EP-A2- 0 322 339
- JP-A- 8 148 392
- US-A- 5 034 849

## Description

The present invention relates to a capacitor element comprising an encapsulation of the capacitor base body anda method for producing such a capacitor element. Such a capacitor may be used as a motor run capacitor in electric motor driven equipments such as refrigerators and washing machines, for example.

The document JP 081 4 8 392 shows a capacitor element comprising an encapsulation of resin injection molded onto the base body.

It is the aim of the present invention to provide a cost-effective encapsulated capacitor element and a method of manufacturing such an encapsulated capacitor element.

This aim is achieved by the present invention as defined by the features of the independent claims.

A capacitor element comprising a capacitor base body and an encapsulation of the base body is provided. The encapsulation is injection-molded directly onto the base body.

The base-body may be designed as a film capacitor comprising dielectric films. Electrode layers may be provided in the form of metallizations applied to the dielectric films. Preferably, the dielectric films comprise a plastic material. In particular, the dielectric films may comprise polypropylene or polyester. Preferably, the metallized dielectric films are wound together, for example in a cylindrical fashion.

The manufacturing process of encapsulating the base body comprises the steps of inserting the capacitor base body in a mold and injecting a molding material into the mold, whereby an encapsulated capacitor element is formed. After that, the encapsulated capacitor element can be separated from the mold.

The encapsulation may comprise a plastic material. In particular, the encapsulation may comprise at least one of polypropylene, polybutylene terephthalate (PBT), nylon, a high density polyethylene (HDPE) or a low density polyethylene (LDPE).

In a preferred embodiment, the base body and the encapsulation may consist of or may comprise a common material. The common material may be a main component of both the dielectric films and the encapsulation. As an example, both the dielectric films of the base body and the encapsulation may comprise polypropylene.

In a further embodiment, the base body and the encapsulation may consist of or may comprise different materials.

The encapsulation is completely free from resin. Preferably, the encapsulation comprises a material, preferably a material forming the main component of the encapsulation, which is more environmentally friendly than epoxy resin.

Since the encapsulation is resin-free, only a short curing time, in particular much shorter than an hour is required. Thus, in the manufacturing process, no storage of a semi-finished product may be required. Preferably, the encapsulation is enabled to be manufactured in the time range of seconds or minutes.

By an encapsulation being injection-molded directly onto the base body, a close fit between the encapsulation and the base body can be achieved. Preferably, the capacitor element is free from gaps, such as air gaps, between the base body and the encapsulation. Thereby, the occurrence of local temperature fluctuations in the capacitor element can be prevented. Moreover, by the close fit of the encapsulation and the base body, a favorable temperature dissipation can be achieved.

In a preferred embodiment, the encapsulation is formed by a single piece, being free from joints.

In this case, the encapsulation can be formed in a single injection process. Thereby, the manufacturing process may be free from the steps of connecting several parts of an encapsulation such as connecting a top part to a main part of an encapsulation. Thereby, a cost-effective manufacturing process can be achieved.

In an alternative embodiment, the encapsulation may be formed by several, for example two injection molding steps. In particular, the manufacturing process may comprise a first injection molding step for forming the first piece and a subsequent second injection molding step for forming the second piece. Preferably, the second piece is directly injection molded onto the first piece such that no additional joining process is required.

In one embodiment, the encapsulation is formed by two pieces being free from multiple joints.

By an encapsulation being free from joints or being free from multiple joints, a reliable protection of the base body can be achieved as the risk of existing or arising gaps in the encapsulation is lower than in an encapsulation comprising several parts joint together.

Preferably, the encapsulation fully encloses the base body. In this case, the encapsulation is free from openings through which the base body is directly accessible from the outside. In a preferred embodiment, the encapsulation hermetically encloses the base body.

In a preferred embodiment, the outer shape of the encapsulation is adapted to the outer shape of the base body.

As an example, in the case that the base body has a cylindrical shape, also the encapsulation has a cylindrical shape being slightly larger than the base body. Preferably, the outer contour of the encapsulation follows the outer contour of the base body. Thereby, the amount of material needed for the encapsulation can be kept low. In addition to that, a capacitor element having a small size and, thus, requiring a minimum amount of space can be provided.

The encapsulation may have a uniform thickness. In particular, a local thickness of the encapsulation may not strongly deviate from the average thickness of the encapsulation. Preferably, the thickness of the encapsulation does not deviate from the average thickness by more than 50 % of the average thickness.

As an example, the thickness of the encapsulation is in the range of 1.0 mm to 2.0 mm.

The encapsulation may comprise an injection-molded marking.

Preferably, the injection-molded marking is formed in the step of injection-molding the encapsulation. Thereby, a time-and cost-saving process is provided, as no additional step for marking the encapsulation is needed.

Preferably, a mold used in the injection-molding process comprises a pattern for forming a marking of the capacitor element. As an example, the marking may be formed as an indention or an elevation in the encapsulation. Preferably, a visible marking is formed.

Moreover, the capacitor element may comprise at least one electric terminal for electrically contacting the base body.

As an example, the terminal may be a fast-on terminal fixed to the base body.

The fast-on terminals may comprise as a base material at least one of the materials brass, copper or mild steel. The base material may have a plating suitable for establishing good electrical contacts. The fast-on terminals may comprise means to provide good mechanical and electrical connections with matching receptacles.

In a further embodiment, the terminal may be configured as an insulated wire terminal, for example a single core or a dual core insulated wire terminal.

Preferably, the encapsulation encloses also the side of the base body where the terminal is attached and more preferably, hermetically encloses the base body.

In a preferred embodiment, the terminal comprises a single piece which is attached to the base body and leads through the encapsulation.

In this case, during the manufacturing process, only a single step may be required for providing the capacitor element with a terminal. In particular, after the encapsulation process, no additional step of providing the capacitor element with outer terminals electrically connected to terminals inside the encapsulation may be required.

Preferably, the terminals are attached to the base body before the encapsulation is formed. The base body with attached terminals may be encapsulated such that the terminals are enclosed by the encapsulation in a region adjacent to the base body. In this case, the terminals may be mechanically stabilized by the encapsulation. Preferably, a close fit of the encapsulation and the terminals is achieved such that the encapsulation is free from gaps and fully encloses the base body.

Other features will become apparent from the following detailed description when considered in conjunction with the accompanying drawings.
Figure 1 shows a capacitor element comprising an injection-molded encapsulation,
Figures 2A, 2B, 2C and 2D show steps of manufacturing a capacitor element,
Figures 3A, 3B, 3C and 3D show, in a cross-sectional view, steps of encapsulating a capacitor element.
Figure 4 shows a further embodiment of a capacitor element comprising an injection-molded encapsulation,
Figure 5 shows a further embodiment of a capacitor element comprising an injection-molded encapsulation.

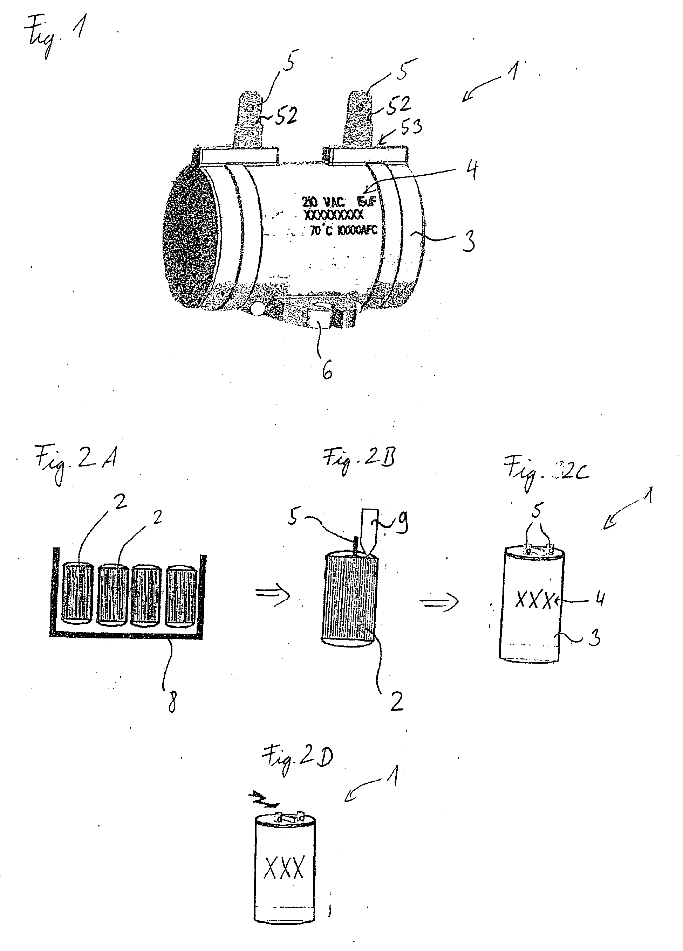

Figure 1 shows a capacitor element 1 comprising a capacitor base body (not visible here) encapsulated by an injection-molded encapsulation 3.

The base-body is designed as a film capacitor comprising wound metallized dielectric films. The dielectric films comprise polypropylene or polyester. In the depicted embodiment, the base body has a round cylindrical shape. In other embodiments, the base body may have a different shape, for example a cuboidal shape.

The encapsulation 3 is injection-molded directly onto the base body such that a close fit of the encapsulation 3 and the base body is established. The encapsulation 3 encloses the base body allover and, in particular, hermetically encloses the base body. The encapsulation 3 comprises a plastic material such as polypropylene and is free from epoxy resin.

The capacitor element 1 comprises two electric terminals 5 for electrically contacting the base body. The terminals 5 are fixed, for example, soldered or welded to the base body and lead through the encapsulation 5. The encapsulation 3 encloses the terminals 5 in regions 53 adjacent to the base body.

The terminals 5 are configured as fast-on terminals 52, comprising means for establishing a good mechanical and electrical connection. In particular, the terminals 53 comprise a dimple or detent. As examples, the terminals 52 may have dimensions of 6.3 mm x 0.8 mm, 4.75 mm x 0.5 mm, 4.75 mm x 0.8 mm, 2.8 mm x 0.5 mm and 2.8 mm x 0.8 mm.

The capacitor element 1 comprises mounting means 6 for mounting the capacitor to its application environment. The mounting means 6 are an integral part of the encapsulation 3 and are formed in the same injection-molded process as the encapsulation 3.

Furthermore, the capacitor element 1 comprises a marking 4, being an indentation in the encapsulation 3. The marking is formed during the process of injection-molding the encapsulation 3 and show the characteristic values of the capacitor element.

As examples, the capacitor element may have a capacitance in the range of 2 µF to 6 µF at a working voltage of 400 V to 450 V or a capacitance of 5 µF to 20 µF at a working voltage of 210 V to 250 V.

Figures 2A, 2B, 2C and 2D show several steps in the manufacturing process of a capacitor element 1, starting from a capacitor base body 2.

Figure 2A shows a first, optional step, whereby the capacitor base body 2 is oil-impregnated in a basin 8. Here, several base bodies 2 are processed together.

Figure 2B shows the step of attaching electric terminals 5 to the base body 2. The terminals 5 may be soldered or welded to the base body 2.

In this embodiment, the terminals 5 are attached to the front face of the cylindrical base body 2. In other embodiments, for example in the embodiment shown in Figure 1, the terminals 5 may be attached to the side face of the base body 2.

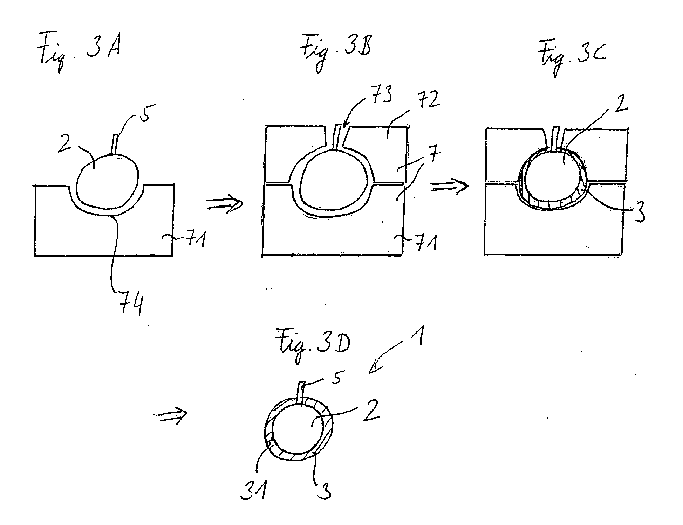

After that, the base body 2 is encapsulated in an injection-molded process. Here, the injection-molding material is directly injected onto the base body 2 as can be seen in Figures 3A to 3D.

Figure 2C shows the capacitor element 1 after the step of encapsulating the base body 2. The terminals 5 fixed to the base body lead through the encapsulation 3 such that they can be directly used for electrically contacting the capacitor element 1. The encapsulation 3 comprises markings 4 formed during the injection-molding process.

Figure 2D shows the final step of testing the capacitor element 1.

By the shown process, a time-saving and cost-effective manufacturing of an encapsulated capacitor element can be achieved. In particular, the injection-molded process requires a low number of process steps and can be carried out during a time-scale of seconds.

Figures 3A, 3B, 3C and 3D show several steps in the process of encapsulating a capacitor element 1, which can be carried out after the manufacturing step shown in Figure 2B.

Figure 3A shows, in a cross-sectional view, the base body 3 inserted into a cavity 74 of a lower part 71 of a mold 7. The shape of the cavity 74 is adapted to the cylindrical outer shape of the base body 3.

In Figure 3B, an upper part 72 of the mold 7 is placed onto the lower part 71. The upper part 72 has an opening 73, through which the injection molding material can be injected into the mold 7.

Figure 3C shows the base body 2 in the mold 7 after the injection molding material has been injected, whereby an encapsulation 3 of the base body 2 is formed. The encapsulation 3 encloses the base body 2 on all sides, including the top and bottom faces.

The base body 2 can be separated from the mold 7 after a few seconds.

Figure 3D shows the encapsulated capacitor element 1. Due to the shape of the mold 7, which is adapted to the outer shape of the base body 2, the encapsulation has a uniform thickness 31. Preferably, the thickness is in the range of 1.0 mm to 2.0 mm.

During the whole injection molding process, the temperature is kept below 250 °C. Thereby, the risk of damaging the base body, for example a partially dissolving the dielectric films, can be reduced.

In particular, when using polypropylene as an injection molding material, a molding process may be enabled, wherein the temperature is kept below 250 °C. In a further embodiment, additives may be added to the molding material to allow for injection processes where the temperature is kept below 250 °C. This may be particularly useful when using injection molding materials different from polypropylene.

In a further embodiment, the temperature in the injection process may be higher than 250 °C, for example up to 300 °C. In this case, the base body may be protected of the heat by a material coating. As an example, the active part of the base body may be enclosed by passive dielectric films. In particular, the passive dielectric films may comprise or be of the same material as the dielectric material in the active part and may be free from a metallization. In a wound capacitor coil, the material coating may comprise turns of unmetallized dielectric films, for example a number of 20 to 30 additional turns of these films. In this case, the base body may be protected by a coating comprising a material which is changing its state from one state to another state, as per latent heat principle, thereby storing heat and thus bringing down the temperature at the base body.

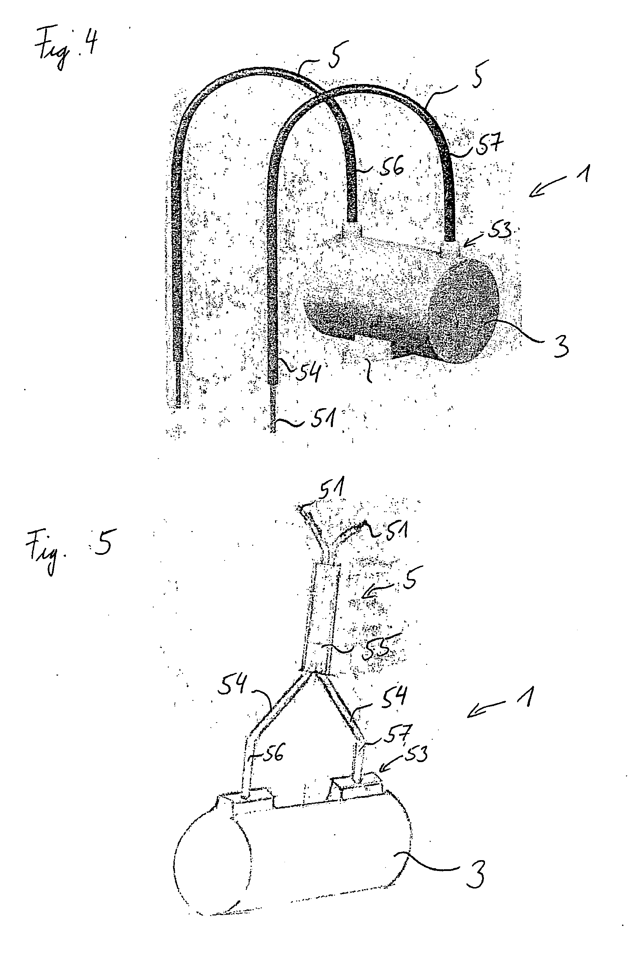

Figures 4 and 5 show further embodiments of capacitor elements 1 comprising a capacitor base body (not visible here) encapsulated by injection-molded encapsulations 3. The base body and the encapsulation 3 may be similar or equal to the base body and the encapsulation 3 of the capacitor element shown in Figure 1.

In Figure 4, the capacitor element 1 comprises terminals 5 in the form of single core wire terminals 56, 57. The wire terminals 56, 57 comprise a conductor 51, insulated by an insulating material 54. As an example, the conductor 51 may comprise a copper material, for example a copper wire. The conductor 51 may have a cross sectional area of 0.35 mm² or larger. The insulating material 54 may comprise polyvinylchloride or polypropylene, for example.

The encapsulation 3 encloses the terminals 5 in regions 53 adjacent to the base body. Thereby, the base body is hermetically enclosed by the encapsulation 3.

In Figure 5, the capacitor element 1 comprises a terminal 5 in the form of a dual core wire terminal. The terminal 5 comprises two single core wire terminals 56, 57 aligned side by side and insulated by a secondary layer 55 of insulating material. The insulating material may consist of polyvinylchloride or polypropylene. The individual single core wires may comprise copper conductors having a cross section of at least 0.35 mm² with polyvinylchloride or polypropylene insulation.

### Reference numerals

1 capacitor element
2 base body
3 encapsulation
31 thickness
4 marking
5 electric terminal
51 conductor
52 fast-on terminal
53 regions of terminals adjacent to base body
54 insulating material
55 second layer of insulating material
56, 57 single core wire terminal
6 mounting means
7 mold
71 lower part of mold
72 upper part of mold
73 opening
8 basin
9 tool

## Claims

1. A capacitor element comprising:
a capacitor base body (2) and an encapsulation (3) of the base body (2), wherein the encapsulation (3) is injection-molded directly onto the base body (2), **characterised in that** the encapsulation (3) is resin-free.

2. The capacitor element according to claim 1,
wherein the encapsulation (3) is formed by a single piece, being free from joints.

3. The capacitor element according to any of the preceding claims, wherein the outer shape of the encapsulation (3) is adapted to the outer shape of the base body (2).

4. The capacitor element according to any of the preceding claims, wherein the encapsulation (3) has a uniform thickness (31).

5. The capacitor element according to any of the preceding claims, wherein the thickness (31) of the encapsulation (3) is in the range of 1.0 mm to 2.0 mm.

6. The capacitor element according to any of the preceding claims, wherein the base body (2) is formed as a film capacitor.

7. The capacitor element according to any of the preceding claims, wherein the encapsulation (3) and the base body (2) comprise a common material.

8. The capacitor element according to claim 7,
wherein the common material comprises polypropylene.

9. The capacitor element according to any of the preceding claims, wherein the encapsulation (3) hermetically encloses the base body (2).

10. The capacitor element according to any of the preceding claims, comprising at least one electric terminal (5) for electrically contacting the base body (2), wherein the electric terminal (5) comprises a single piece being attached to the base body (2) and leading through the encapsulation (3).

11. The capacitor element according to any of the preceding claims,
wherein the base body (2) is oil-impregnated.

12. The capacitor element according to any of the preceding claims,
wherein the base body (2) is designed as a film capacitor comprising wound metallized dielectric films and wherein the base body (2) has a round cylindrical shape.

13. The capacitor element according to any of the preceding claims,
wherein the encapsulation comprises at least one of polypropylene, polybutylene terephthalate, nylon, a high density polyethylene or a low density polyethylene.

14. Method for producing a capacitor element according to claim 1 comprising the following steps:
A) Inserting a capacitor base body (2) in a mold (7, 71, 72),
B) Injecting a molding material into the mold (7, 71, 72), whereby an encapsulated capacitor element (1) is formed and whereby during the injection molding process the temperature is kept below 250 °C, wherein an encapsulation (3) of the encapsulated capacitor element (1) is resin-free,
C) Separating the encapsulated capacitor element (1) from the mold (7, 71, 72).

## Patentansprüche

1. Kondensatorelement, das Folgendes umfasst:
einen Kondensatorgrundkörper (2) und eine Kapselung (3) des Grundkörpers (2), wobei die Kapselung (3) direkt auf den Grundkörper (2) spritzgegossen wird, **dadurch gekennzeichnet, dass** die Kapselung (3) harzfrei ist.

2. Kondensatorelement nach Anspruch 1, wobei die Kapselung (3) aus einem einzelnen Stück ausgebildet wird, wobei sie von Verbindungsstellen frei ist.

3. Kondensatorelement nach einem der vorhergehenden Ansprüche, wobei die äußere Gestalt der Kapselung (3) an die äußere Gestalt des Grundkörpers (2) angepasst ist.

4. Kondensatorelement nach einem der vorhergehenden Ansprüche, wobei die Kapselung (3) eine gleichförmige Dicke (31) aufweist.

5. Kondensatorelement nach einem der vorhergehenden Ansprüche, wobei die Dicke (31) der Kapselung (3) im Bereich von 1,0 mm bis 2,0 mm liegt.

6. Kondensatorelement nach einem der vorhergehenden Ansprüche, wobei der Grundkörper (2) als ein Schichtkondensator ausgebildet ist.

7. Kondensatorelement nach einem der vorhergehenden Ansprüche, wobei die Kapselung (3) und der Grundkörper (2) ein gemeinsames Material umfassen.

8. Kondensatorelement nach Anspruch 7, wobei das gemeinsame Material Polypropylen umfasst.

9. Kondensatorelement nach einem der vorhergehenden Ansprüche, wobei die Kapselung (3) den Grundkörper (2) hermetisch einschließt.

10. Kondensatorelement nach einem der vorhergehenden Ansprüche, umfassend mindestens einen elektrischen Anschluss (5) zum elektrischen Kontaktieren des Grundkörpers (2), wobei der elektrische Anschluss (5) ein einzelnes Stück umfasst, das an dem Grundkörper (2) angebracht ist und durch die Kapselung (3) führt.

11. Kondensatorelement nach einem der vorhergehenden Ansprüche,
wobei der Grundkörper (2) mit Öl imprägniert ist.

12. Kondensatorelement nach einem der vorhergehenden Ansprüche,
wobei der Grundkörper (2) als ein Schichtkondensator ausgelegt ist, der aufgewickelte metallisierte dielektrische Schichten umfasst und wobei der Basiskörper (2) eine runde zylindrische Gestalt aufweist.

13. Kondensatorelement nach einem der vorhergehenden Ansprüche,
wobei die Kapselung Polypropylen, Polybutylen, Terephthalat, Nylon, ein Polyethylen hoher Dichte und/oder ein Polyethylen niedriger Dichte umfasst.

14. Verfahren zum Herstellen eines Kondensatorelements nach Anspruch 1, das die folgenden Schritte umfasst:
A) Einsetzen eines Kondensatorgrundkörpers (2) in eine Form (7, 71, 72),
B) Einspritzen eines Ausformmaterials in die Form (7, 71, 72), wodurch ein gekapseltes Kondensatorelement (1) ausgebildet wird und wodurch die Temperatur während des Einspritzformprozesses unter 250°C gehalten wird, wobei eine Kapselung (3) des gekapselten Kondensatorelements (1) harzfrei ist,
C) Trennen des gekapselten Kondensatorelements (1) von der Form (7, 71, 72).

## Revendications

1. Elément de condensateur comportant :
un corps de base (2) de condensateur et une encapsulation (3) du corps de base (2), l'encapsulation (3) étant moulée par injection directement sur le corps de base (2),
**caractérisé en ce que**
l'encapsulation (3) ne présente pas de résine.

2. Elément de condensateur selon la revendication 1, dans lequel l'encapsulation (3) est formée d'une seule pièce et ne présente pas de joint.

3. Elément de condensateur selon l'une quelconque des revendications précédentes, dans lequel la forme extérieure de l'encapsulation (3) est adaptée à la forme extérieure du corps de base (2).

4. Elément de condensateur selon l'une quelconque des revendications précédentes, dans lequel l'encapsulation (3) présente une épaisseur uniforme (31).

5. Elément de condensateur selon l'une quelconque des revendications précédentes, dans lequel l'épaisseur (31) de l'encapsulation (3) est comprise dans la plage de 1,0 mm à 2,0 mm.

6. Elément de condensateur selon l'une quelconque des revendications précédentes, dans lequel le corps de base (2) est configuré comme condensateur en film.

7. Elément de condensateur selon l'une quelconque des revendications précédentes, dans lequel l'encapsulation (3) et le corps de base (2) comprennent un matériau commun.

8. Elément de condensateur selon la revendication 7 dans lequel le matériau commun contient du polypropylène.

9. Elément de condensateur selon l'une quelconque des revendications précédentes, dans lequel l'encapsulation (3) enferme hermétiquement le corps de base (2).

10. Elément de condensateur selon l'une quelconque des revendications précédentes, comprenant au moins une borne électrique (5) qui assure le contact électrique avec le corps de base (2), la borne électrique (5) comportant une seule pièce reliée au corps de base (2) et traversant l'encapsulation (3).

11. Elément de condensateur selon l'une quelconque des revendications précédentes, dans lequel le corps de base (2) est imprégné d'huile.

12. Elément de condensateur selon l'une quelconque des revendications précédentes, dans lequel le corps de base (2) est conçu sous la forme d'un condensateur en film qui comprend des films diélectriques métallisés enroulés, le corps de base (2) présentant la forme d'un cylindre circulaire.

13. Elément de condensateur selon l'une quelconque des revendications précédentes, dans lequel l'encapsulation comporte au moins du polypropylène, du polytéréphtalate de butylène, du nylon, un polyéthylène à haute densité ou un polyéthylène à basse densité.

14. Procédé de production d'un élément de condensateur selon la revendication 1, le procédé comportant les étapes suivantes :
A) insérer un corps de base (2) de condensateur dans un moule (7, 71, 72),
B) injecter un matériau de moulage dans le moule (7, 71, 72), pour former ainsi un élément de condensateur (1) encapsulé, la température qui règne pendant l'opération de moulage par injection étant maintenue en dessous de 250°C et l'encapsulation (3) de l'élément de condensateur (1) encapsulé étant exempte de résine,
C) enlever du moule (7, 71, 72) l'élément de condensateur (1) encapsulé.
